# EUROPEAN PATENT APPLICATION

(11) **EP 0 767 044 A1**
(43) Date of publication of application: **09.04.1997**
(21) Application number: 95115707.2
(22) Date of filing: 05.10.1995
(51) Int. Cl.: B29C 47/00, B29C 47/16

(54) **Extrusion die with advanced flow distribution correction device**

(30) Priority: 04.10.1995 US
(71) Applicant: Extrusion Dies, Inc., Chippewa Falls, Wisconsin 54729-1433 (US)
(72) Inventor: Lippert, Harry G., Cameron, Wisconsin 54822 (US); Ulcej, John A., Colfax, Wisconsin 54730 (US)
(74) Representative: Weitzel, Wolfgang, Dr.-Ing. Patentanwalt

(57) **Abstract**

An extrusion die (20) includes a restrictor bar having a deformable flow surface extending into a cavity of the die (20) and a plurality of thermal actuators (42-1,42-30) coupled to and spaced along the restrictor bar. The thermal actuators (42-1,42-30) are selectively operatable simultaneously or individually to control positioning of the flow surface.

## Description

### Technical Field

The present invention relates generally to extrusion apparatus, and more particularly to an extrusion die having improved film and sheet extrusion capabilities.

### Background Art

An extrusion die is used to extrude molten thermoplastic into a film or sheet. In such a die, some provision must be made to spread the thermoplastic flow from the center of the die to the outer ends thereof so that product of substantially uniform side-to-side thickness can be obtained. In prior designs, this spreading is accomplished by differentially varying either the flow length or the gap depth across the width of the die. In a coathanger type die, where spreading is accomplished by differentially varying the flow length, a straight or curved preland disposed between a manifold of the die and a die outlet includes tapered surfaces extending from a preland back line toward a land adjacent the die outlet. In a typical die of this type, the preland back line comprises first and second straight-line segments disposed on either side of a die centerline wherein the first and second segments are disposed at an obtuse angle with respect to one another. The preland presents an increased flow path, and hence resistance to flow, at the center of the die compared to the outer ends of the die so that flow is substantially uniformly distributed across the width thereof. However, because the overall die length is increased due to the presence of the preland, relatively large moment arms act at the die lips during high pressure extrusion of the viscous thermoplastic material, resulting in an undesirably high overall dynamic "clamshelling" (i.e., opening) effect at the die outlet. Also, because of flow considerations, it may be preferable in such a die to have the back line of the manifold be parallel to the preland back line segments and to arrange body bolts holding the die portions together at locations equidistantly spaced from the manifold back line so that leakage of extrudate between the die portions is minimized. Because the body bolts are thus spaced unequally from the die outlet, unequal moment arms act across the width of the die lips, resulting in an undesirably high degree of differential clamshelling.

In a restrictor bar type die, a preland may or may not be used. Further, a flow restriction device, such as a bar having a curved or straight flow surface, is movable into the flow path by an actuator to provide a gap depth which varies across the die width. Because a restrictor bar contributes relatively little to the overall size of the die between the die entrance and exit as compared to a preland, this dimension of the die can be made relatively short if a preland is not used, in turn reducing the magnitude of moment arms acting at the die outlet and resulting in a desirable reduction in overall dynamic clamshelling. Further, greater freedom is afforded in the ability to configure the manifold back line, and hence the body bolts can be located on a line parallel to the die outlet so that differential clamshelling is reduced while still minimizing extrudate leakage between the die portions.

In both types of dies, the preland back line or the flow surface of the restrictor bar is shaped to present a varying pressure drop to the thermoplastic flow so that the gross or overall flow variation is minimized. However, intermediate gauge variations smaller than the overall flow variation arise from nonlinear flow phenomena, causing a characteristic M- or W- cross sectional pattern in the extruded product from a die having a straight-line preland back line or a uniformly curved restrictor bar flow surface (i.e., a surface defined by a section of a circle). These patterns result from the fact that a linear preland back line or uniformly curved restrictor bar flow surface can only approximately compensate for the nonlinear flow phenomena.

In addition, narrow gauge variations smaller than the intermediate gauge variations can arise in the extruded product due to localized variances in extruding process parameters, such as melt temperature, viscosity, and the like. Because these variations are quite small, for example on the order of 1-2 inches in width, these thickness variations are typically minimized by adjusting the relatively flexible die lips in a localized fashion. However, undertaking flow tuning at the die exit may not be completely satisfactory because there is insufficient time for the stresses resulting from the memory of the thermoplastic to dissipate, and hence distortions in the extruded product may form.

The foregoing measures to reduce or eliminate flow variations are highly dependent upon process parameters and material type. Thus, in a monolayer application where a homogeneous thermoplastic material is to be extruded into a single-layer sheet, the die can be set up and adjusted to obtain good to excellent quality product. However, when it is desired to extrude a different material or when certain process parameters are to be changed, a potentially time-consuming and costly recalibration procedure must be undertaken.

Further, when one attempts to employ the above measures to coextrude dissimilar thermoplastic materials, a situation can arise where die adjustments intended to improve the flow of one of the materials do not improve or even adversely affect the flow of the other material. In this case, boundary distortions in the interface between the layers can occur, resulting in unacceptable product.

### Summary of the Invention

An extrusion die according to the present invention undertakes flow tuning at an early point in the extrusion process so that stresses resulting from the memory of the thermoplastic can dissipate before the product exits the die.

More particularly, according to one aspect of the present invention, an extrusion die includes die body portions together defining a die cavity having a die entrance and a die exit. A restrictor bar having a flow surface of deformable shape extends into the die cavity between the die entrance and the die exit. A plurality of thermal actuators are coupled to and spaced along the restrictor bar and are disposed on one of the die body portions. The thermal actuators are selectively operable simultaneously or individually to control positioning of the flow surface in the die cavity.

Preferably, each thermal actuator includes a thermally responsive member in contact with the restrictor bar and a heating element in thermal contact with thermally responsive member. Also in accordance with the preferred embodiment, the thermally responsive member comprises a hollow translator member. Each actuator preferably includes a main tube formed of a material having a low coefficient of thermal expansion and within which the thermally responsive member and the heating element are disposed. Still further, the restrictor bar may include an outer surface opposite the flow surface which is slotted to further enhance flexibility.

In addition to the foregoing, the flow surface of the restrictor bar may be preformed into a curved shape. A removable insert may be provided in the die having a flow surface opposite the restrictor bar, in which case the flow surface of the removable insert may be flat or curved.

Still further in accordance with the preferred embodiment, the die cavity includes a manifold having a straight back line parallel to the die exit. In addition, the restrictor bar may be disposed in a recess defined in part by one of a pair of die lips defining the die exit. Also, another of the lips may include a hinge and adjustment apparatus for adjusting the other lip.

The extrusion die of the present invention effectuates flow tuning at a point substantially upstream of the die exit. Thus, the thermoplastic has a chance to stabilize under substantially constant shear conditions prior to exiting the die. In this fashion, stresses that can lead to formation of distortions in the product are reduced.

### Brief Description of the Drawings

Fig. 1 comprises an isometric view of an extrusion die incorporating the present invention;
Fig. 2 comprises a plan view of the extrusion die of Fig. 1;
Figs. 3 and 4 are elevational views of front and back sides, respectively, of the extrusion die of Fig. 1;
Fig. 5 is an end elevational view of the extrusion die of Fig. 1;
Fig. 6 is an exploded isometric view of the extrusion die of Fig. 1;
Fig. 7 is a sectional and partial fragmentary view taken generally along the lines 7-7 of Fig. 3; and
Fig. 8 is a partial sectional and fragmentary view taken generally along the lines 8-8 of Fig. 7.

### Description of the Preferred Embodiment

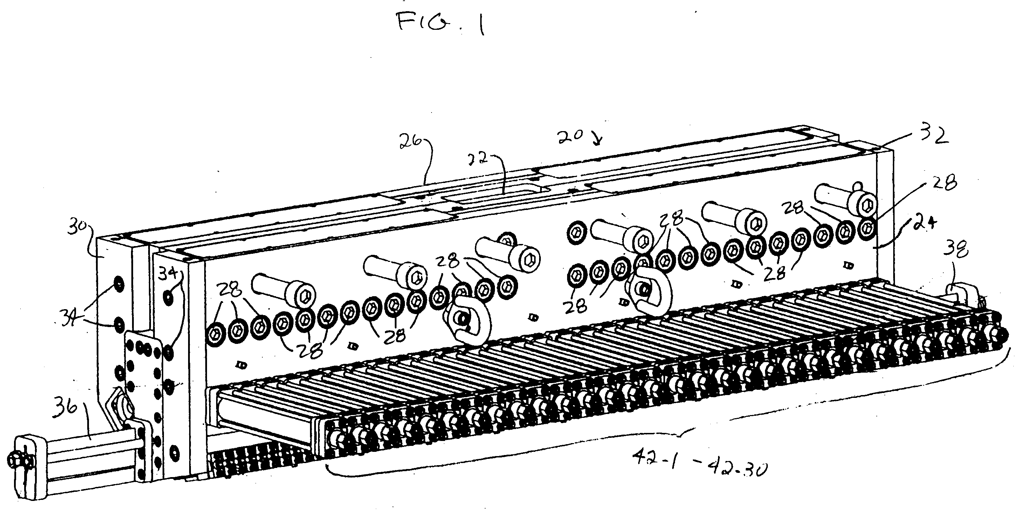

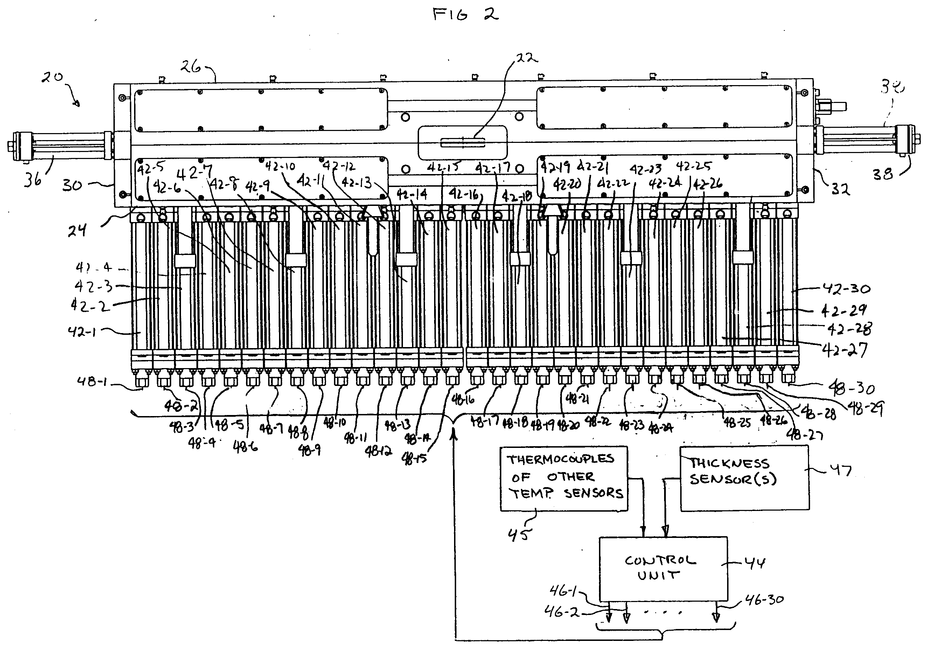

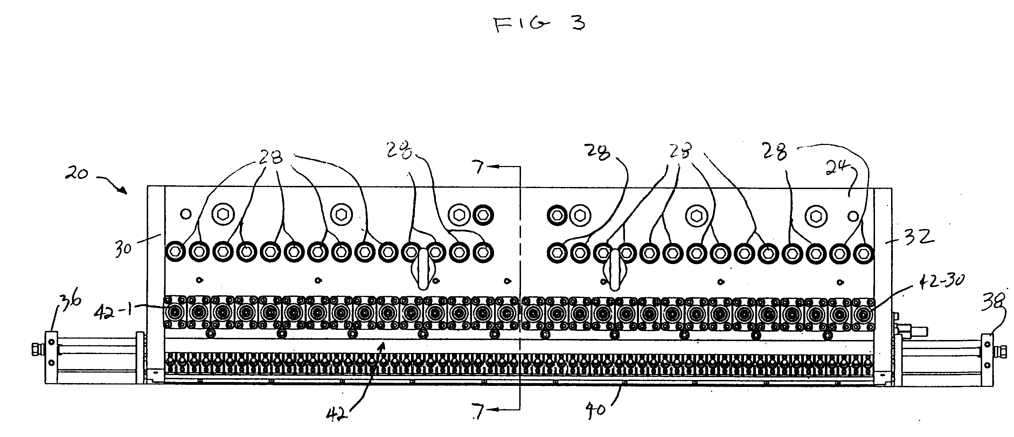

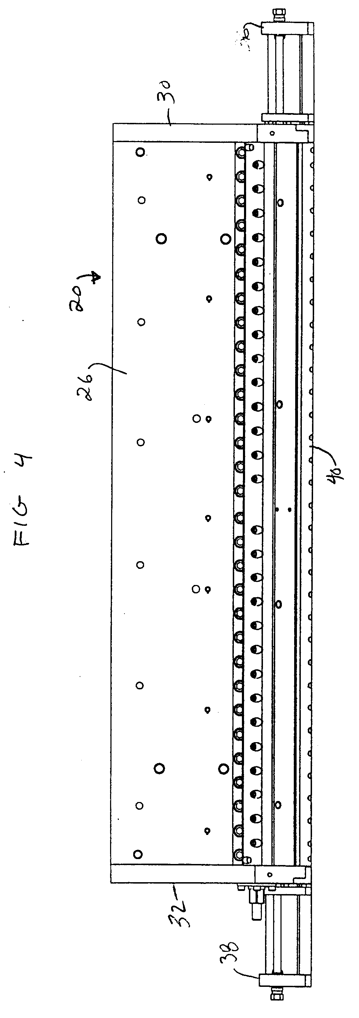

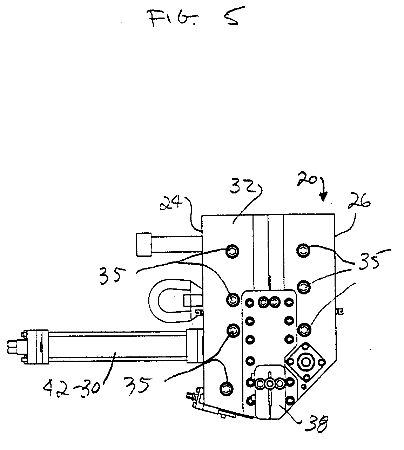

Referring first to Figs. 1-5, an extrusion apparatus in the form of an extrusion die 20 includes a die entrance 22 into which molten thermoplastic is delivered by an extruder (not shown). The extrusion die 20 includes first and second die portions or halves 24, 26 which are held together by a plurality of body bolts 28 and a pair of end plate assemblies 30, 32 which are secured by bolts 34, 35 (seen in Figs. 1 and 5) to the die portions 24, 26.

If desired, adjusters 36, 38 may be provided for positioning deckles which in turn limit the width of extruded product from the die 20.

The die further includes a die exit 40 opposite the die entrance 22 and through which molten thermoplastic in sheet form is passed. The size of the die exit 40 may be adjusted by any suitable apparatus, for example by a sliding lip arrangement, a flexible lip arrangement movable by mechanical or thermally adjustable bolts (an example of the latter of which is disclosed in Nissel U.S. Patent No. 3,940,221, the disclosure of which is hereby incorporated by reference herein) or the like.

Referring to all of the Figs., disposed along the length of the die portion 24 and secured thereto are a plurality of thermal actuators 42-1, 42-2 . . . 42-30, each of which is operable by a control unit 44 which is responsive to one or more sensed parameters, such as the temperatures of one or more portions of each actuator 42, as sensed by a plurality of thermocouples or other temperature sensors 45, and the sheet thickness just downstream of the die exit 40 at a plurality of spaced points across the width of the sheet, as detected by one or more thickness sensors 47. Specifically, the control unit 44 includes a plurality of output lines 46-1, 46-2 . . . 46-30 which are coupled to input leads 48-1, 48-2 . . . 48-30 of the thermal actuators 42-1, 42-2 . . . 42-30, respectively. The control unit 44 is capable of delivering controlled current levels using either a duty-cycle or pulse-width mode of operation or other regulation scheme to the thermal actuators 42-1, 42-2 . . . 42-30 either together or individually to accomplish flow tuning at a point inside the die 20, as noted in greater detail hereinafter.

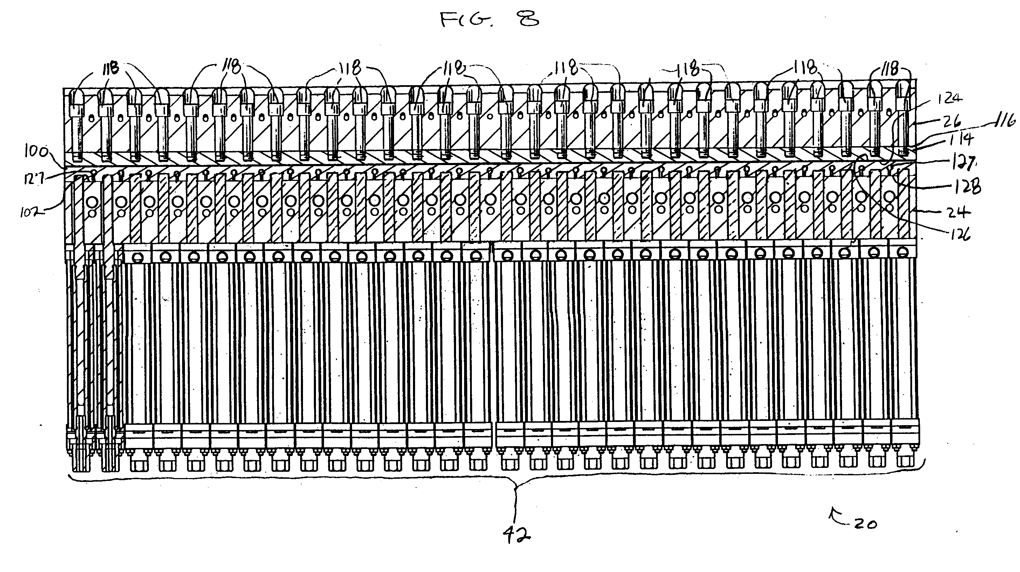

While thirty thermal actuators 42 are illustrated in the drawings (except Fig. 8, which is a fragmentary view as noted above) in connection with a die 20 having a 60 inch die exit width, it should be noted that a different number of actuators 42 may alternatively be used, as should be evident to one of ordinary skill in the art.

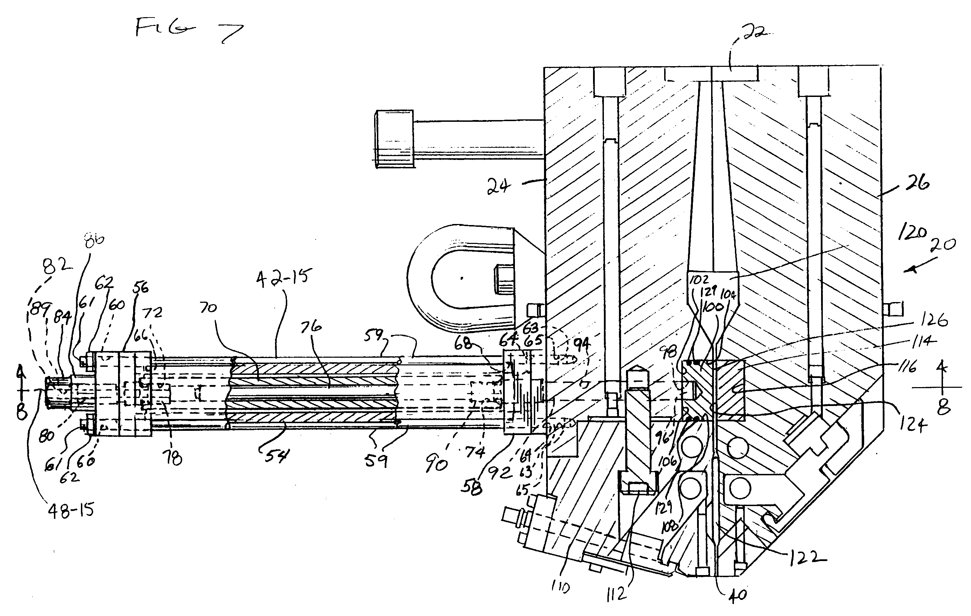

The thermal actuators 42 are identical, and hence only the thermal actuator 42-15 seen in Fig. 7 will be described in detail. The thermal actuator 42-15 includes a housing member preferably in the form of a main tube 54 fabricated of a material having a low thermal coefficient of expansion, such as stainless steel marketed by Scientific Alloys, Inc. of Westerly, Rhode Island under the trademark Invar®, which is captured between first and second heads 56, 58, respectively. First through fourth tie rods 59 extend through the bores 60 in the head 56 and include threaded ends 61 that receive nuts 62 thereon. The nuts 62 bear against the head 56. The tie rods 59 include further threaded ends 63 that extend through bores 64 in the head 58 and are threaded into threaded bores 65 in the die half 24, respectively. The thermal actuator 42 is thus firmly secured to the die 20 and the main tube 54 is firmly seated in counterbores 66, 68 in the heads 56, 58, respectively.

A translator member 70 in the form of a hollow column is disposed within the main tube 54 and includes first and second counterbores 72, 74 at opposite ends thereof. An electric resistance heating element 76 is disposed within the translator 70 between the counterbores 72, 74. Alternatively, a flexible resistance heating element may be wrapped around the outside of the translator 70, if desired. The counterbore 72 is threaded to accept a threaded end 78 of a mechanical adjuster 80 which extends through the head 56. The mechanical adjuster 80 includes a further threaded end 82 opposite the end 78 which is engaged by a nut 84 that in turn bears against a shouldered portion 86 of the head 56. A bore 89 extends through the head 56 and the nut 84 and the lead 48-15 extends through the bore 89 and is connected to the heating element 76.

The counterbore 74 is likewise threaded and accepts a threaded end 90 of an elongate bolt or stud 92. The bolt or stud 92 extends through the head 58 and a bore 94 in the die half 24 and includes another threaded end 96 which extends into a threaded bore in a restrictor bar 100 which is in turn disposed in a recess 102. The recess 102 is formed by walls 104, 106 in the die body half 24, and is further defined by a surface 108 of a replaceable lip insert 110. The insert 110 is retained on the die body portion 24 by a plurality of bolts 112.

A removable and replaceable flow insert 114 is disposed within a recess 116 in the die body portion 26 and is retained therein by bolts 118 (Fig. 8). The recesses 102 and 116 and the restrictor bar 100 and the insert 114 extend across the full width of the die 20 and are disposed opposite one another between the die entrance 22 and the die exit 40, and preferably between a manifold 120 and a melt well 122. As seen in Fig. 8, the removable flow insert 114 includes a flow surface 124 which may be flat or curved or otherwise profiled to accomplish flow tuning of thermoplastic exiting the manifold 120 toward the die exit 40. In addition, the thermal actuators 42 are operable by the control unit 44 to produce localized bends or deformations in a flow surface 126 of the restrictor bar to accomplish further flow tuning of the thermoplastic. If necessary or desirable, relief cuts or slots 127 (seen in Fig. 8) may be formed in a rear surface 128 of the restrictor bar 100 to render the bar 100 more flexible so that these localized deformations can be more easily produced therein. Also, seals 129 may be provided in seal recesses to prevent the escape of extrudate past the restrictor bar 100.

More particularly, when electric current is delivered to the input lead 48-15, the heating element 76 heats up and causes the translator 70 to lengthen. This lengthening results in translation of the elongate bolt or stud 92 so that the flow surface 126 of the restrictor bar 100 extends more fully into the flow channel between the manifold 120 and the melt well 122. Because the main tube 54 is formed of a material having a low thermal coefficient of expansion, offsetting of the lengthening of the translator 70 that would otherwise occur due to expansion (and hence lengthening) of the main tube 54 is substantially avoided. Conversely, when electric current is no longer supplied to the heating element 76, the translator 70 cools, in turn resulting in a contraction of the elongate stud 92 and a withdrawal of a portion of the restrictor bar flow surface 126 from the channel between the manifold 120 and the melt well 122. In this way, local deformations can be formed in the flow surface 126 so that flow tuning can be precisely achieved.

As noted previously, the flow surface 124 of the insert 114 may be flat; however, it may prove desirable to provide a different shape for the flow surface 124 so that less deformation of the flow surface 126 of the restrictor bar 100 would be required to produce a given flow effect than would otherwise be necessary. In this way, the overall stresses on the restrictor bar 100 can be reduced so that the bar 100 will be more flexible and capable of responding as necessary to the thermal actuators 42 to control flow. In an exemplary embodiment, the flow surface 124 of the insert 114 may have a shape defined by a polynomial equation when viewed as seen in Fig. 8 while the flow surface 126 of the restrictor bar 100 may be adjusted by the thermal actuators 42 via the control unit 44 to have a uniform curved shape, for example a shape having a constant radius and thus defining a section of a circle. Alternatively, the flow surface 124 may have a uniform curved shape while the flow surface 126 may have a shape defined by a polynomial equation.

The programming for the control unit 44 to produce currents of appropriate magnitude for the input leads 48-1, 48-2 . . . 48-30 is well within the capabilities of one of ordinary skill in the art. Any commercial control unit for controlling thermal die lip adjustment apparatus can be used, with only minor modifications to the programming thereof being necessary to account for variations in thermal response characteristics. One type of control unit is produced by Eurotherm, Inc. of Billerica, MA.

The restrictor bar 100 and the insert 114 together accomplish flow tuning at an early point in the extrusion process well upstream of the die exit 40. In fact, the die exit 40 can be adjusted to have a constant gap opening dimension across the full width of the die 20 so that no flow tuning need be undertaken at such point. Because flow tuning takes place at an early point in the extrusion process and because the flow of extrudate is maintained in substantially constant shear conditions thereafter until the flow leaves the die, the flow is given an opportunity to fully develop and stabilize across the die width for as long as possible so that stresses resulting from the memory of the extrudate dissipate before the extrudate leaves the die. This results in reduced stress and distortion in the product.

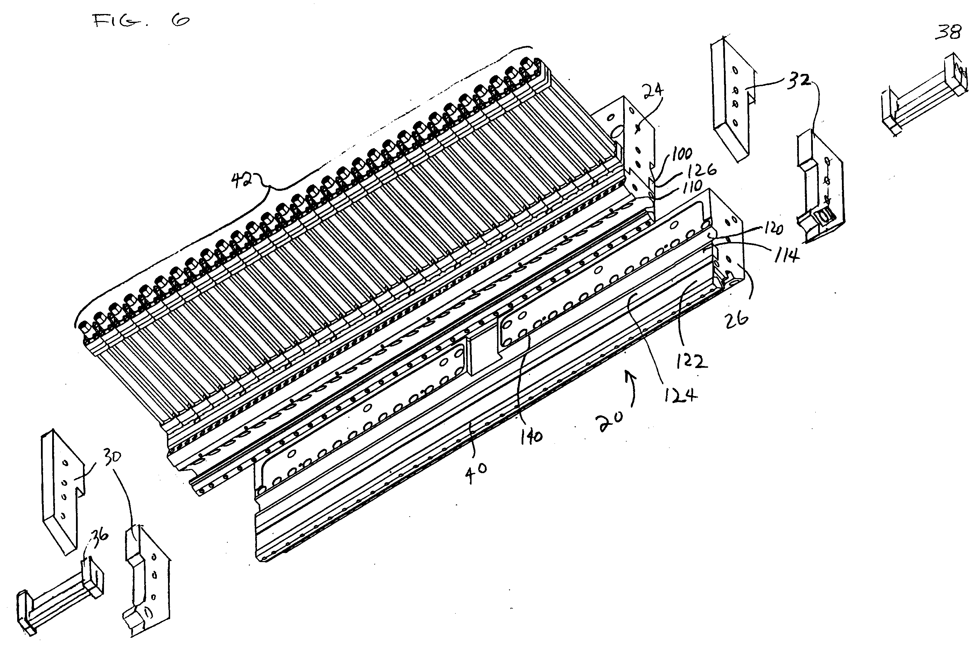

The present invention achieves other significant advantages.
1. The adjustable restrictor bar and replaceable insert facilitate reconfiguration of the die so that different materials and/or process parameters can be accommodated. Thus, the die is not limited to use with a small number of resins under limited process conditions; rather, the bar and insert flow surfaces can be shaped and/or profiled, and/or the insert can be replaced by a different insert, to permit extrusion of a wide range of polymers under a wide range of conditions.
2. The high degree of flexibility of the restrictor bar and/or the ability to include a properly shaped or profiled restrictor bar and replaceable insert permit the flow to be tuned so that shear rates are brought within a range of magnitudes that result in decreased M- or W- patterns while gross or overall flow variations are also minimized. The flow tuning resulting in reduced M- or W-patterns may be realized by deforming, preforming and/or profiling either or both of the flow surfaces 124, 126, for example, by bending or machining either or both surfaces 124, 126 to a nonlinear shape that represents the nonlinear way the polymer flows in the die cavity. This shape may be defined by a polynomial equation, such as a cubic polynomial, which defines the gap depth as a function of distance from the die centerline. The flow tuning minimizing the gross or overall flow variations is accomplished by providing either or both flow surfaces 124, 126 with a uniform curvature either alone or in addition to the polynomial shape noted above (in the latter case, the uniform curvature would be superimposed on the polynomial shape) and any other shaping or profiling. Any shaping of the bar 100 to effectuate the foregoing may be accomplished by preforming of the bar and/or appropriately operating the thermal actuators 42.
3. Narrow gauge variations due to variances in extruding process parameters are reduced or removed by adjusting the flow surface 126 using the thermal actuators 42 during operation of the die 20. These flow surface adjustments are in addition to the shaping of the surface 126 noted in 2. above. These adjustments are small in magnitude and may be accomplished on a feedback basis by the control unit 44.
4. By performing flow tuning inside the die 20 well upstream of the die exit, the lip gap dimension at the die exit 40 may be made constant across the width of the die 20. This leads to uniform polymer exit die swell, resulting in improved polymer orientation during draw-down. A uniform lip gap also facilitates adjustment of the width of the extruded product using internal deckles.
5. Because flow tuning is not accomplished at the die exit, a flexible (i.e., hinged) lip is not required, and hence the die lips can be made identical so that better control of the temperature at both lips can be obtained. Also, the resulting elimination of adjusting apparatus in the area of the die exit reduces instabilities caused by differential thermal masses at the die exit and further allows the die lips to be placed closer to downstream devices for polymer formation, such as three-roll polishing units, or the like. In addition, the elimination of the flex hinge(s) enables the die flow surfaces to be more precisely machined and/or coated with or fabricated of other materials which cannot easily flex, such as ceramic, tungsten carbide, etc. Thus, rather then providing one or more flexible lips as seen in the Figs., either a sliding-lip die exit or replaceable lip inserts could be used to obtain the foregoing advantages. Alternatively, if the foregoing advantages are not critical, one or both of the die lips could be hinged, as seen in the Figs., and adjustment apparatus could be included to permit rapid adjustment of the die exit to change film or sheet thickness or product characteristics.
6. As seen in Fig. 6, the manifold 120 includes a straight back line 140 and the body bolts 28 are located on a straight line parallel to the back line 140 and parallel to the die exit. Differential clamshelling is thus effectively eliminated and leakage of extrudate is minimized. Also, a preland could optionally be included in the die 20, if desired.
7. The present die is useful to reduce flow distortions in monolayer applications as well as coextrusion applications. In the latter case, M- or W- patterns in individual outer layers are reduced or eliminated as noted in 2 above.
8. In a coextrusion application, interfacial instabilities due to a high shear rate through the restrictor bar gap can be reduced or eliminated by adjusting the restrictor bar using the thermal actuators 42 to lessen the shear rate.
9. Either or both of the flow surfaces 124, 126 is relatively long in the direction parallel to the flow of thermoplastic in the die 10. As a result more control over the flow is accomplished as compared with other designs having relatively narrow restrictor bars.

Numerous modifications and alternative embodiments of the invention will be apparent to those skilled in the art in view of the foregoing description. Accordingly, this description is to be construed as illustrative only and is for the purpose of teaching those skilled in the art the best mode of carrying out the invention. The details of the structure may be varied substantially without departing from the spirit of the invention, and the exclusive use of all modifications which come within the scope of the appended claims is reserved.

## Claims

1. An extrusion die, comprising:
die body portions together defining a die cavity having a die entrance and a die exit;
a restrictor bar having a flow surface extending into the die cavity between the die entrance and the die exit wherein the flow surface has a deformable shape; and
a plurality of thermal actuators coupled to and spaced along the restrictor bar and disposed on one of the die body portions, the thermal actuators being selectively operable simultaneously or individually to control positioning of the flow surface in the die cavity.

2. The extrusion die of claim 1, wherein each thermal actuator includes a thermally responsive member in contact with the restrictor bar and a heating element in thermal contact with the thermally responsive member.

3. The extrusion die of claim 2, wherein the thermally responsive member includes a translator and an elongate bolt secured to the translator and disposed in contact with the restrictor bar.

4. The extrusion die of claim 2, wherein each actuator includes a housing member formed of a material having a low coefficient of thermal expansion and within which the thermally responsive member and the heating element are disposed.

5. The extrusion die of claim 2, wherein the thermally responsive member is hollow and the heating element is disposed within the thermally responsive member.

6. The extrusion die of claim 2, further including manual adjustment apparatus coupled to the thermally responsive member.

7. The extrusion die of claim 1, wherein the restrictor bar includes an outer surface opposite the flow surface which is slotted.

8. The extrusion die of claim 1, wherein the flow surface is preformed into a curved shape.

9. The extrusion die of claim 1, further including a removable insert in the die having a flow surface opposite the restrictor bar.

10. The extrusion die of claim 9, wherein the flow surface of the removable insert is flat.

11. The extrusion die of claim 9, wherein the flow surface of the removable insert is curved.

12. The extrusion die of claim 1, wherein the die cavity includes a manifold having a straight back line parallel to the die exit.

13. The extrusion die of claim 1, wherein the die exit is defined by a pair of lips and wherein the restrictor bar is disposed in a recess defined in part by one of the lips.

14. The extrusion die of claim 13, wherein another of the lips includes a hinge and further including adjustment apparatus for adjusting the other lip.

15. The extrusion die of claim 1, in combination with a control for operating the thermal actuators.

16. An extrusion die, comprising:
a pair of die body portions;
a plurality of body bolts securing the die body portions together wherein the die body portions together define a die cavity having a die entrance and a straight-line die exit and wherein the body bolts lie on a line substantially parallel to the die exit;
a restrictor bar having a first flow surface extending into the die cavity between the die entrance and the die exit wherein the first flow surface has a deformable shape;
a removable insert having a second flow surface disposed in the die cavity opposite the first flow surface, at least one of the first and second flow surfaces being curved; and
a plurality of actuators coupled to the restrictor bar and being selectively operable to control positioning of the first flow surface in the die cavity.

17. The extrusion die of claim 16, wherein the actuators are carried by one of the die body portions.

18. The extrusion die of claim 17, wherein the actuators are of the thermal type.

19. The extrusion die of claim 18, wherein each actuator includes a translator and a heating element disposed in a housing member fabricated of a material having a low thermal coefficient of expansion.

20. The extrusion die of claim 19, further including manual adjustment apparatus coupled to the thermally responsive member.

21. The extrusion die of claim 19, wherein the die exit is defined by a pair of die lips and the restrictor bar is disposed in a recess defined in part by one of the die lips.

22. The extrusion die of claim 16, wherein the restrictor bar includes an outer surface opposite the flow surface which is slotted.

23. The extrusion die of claim 16, wherein the first flow surface is preformed into a curved shape.

24. The extrusion die of claim 16, wherein the first flow surface is preformed into a flat shape.

25. The extrusion die of claim 16, wherein the second flow surface is preformed into a curved shape.

26. The extrusion die of claim 16, wherein the second flow surface is preformed into a flat shape.

27. The extrusion die of claim 17, wherein the die cavity includes a manifold having a straight back line parallel to the die exit.

28. The extrusion die of claim 17, wherein the die exit is defined by a pair of lips and wherein one of the lips includes a hinge and further including adjustment apparatus for adjusting the other lip.

29. The extrusion die of claim 17, in combination with a control for operating the actuators.

30. An extrusion die, comprising:
a pair of die body portions;
a plurality of body bolts securing the die body portions together wherein the die body portions together define a die cavity having a die entrance and a straight-line die exit and wherein the body bolts lie on a line substantially parallel to the die exit;
a restrictor bar having a first flow surface extending into the die cavity between the die entrance and the die exit; and
a removable insert having a second flow surface disposed in the die cavity opposite the first flow surface, at least one of the first and second flow surfaces having a shape defined by a polynomial equation.

31. The extrusion die of claim 1, further including a plurality of actuators coupled to the restrictor bar and being selectively operable to control positioning of the first flow surface in the die cavity.

32. The extrusion die of claim 31, wherein the actuators are manually operable.

33. The extrusion die of claim 31, in combination with a control for automatically operating the actuators.

34. The extrusion die of claim 33, wherein the actuators are of the thermal type.
